# EUROPÄISCHE PATENTANMELDUNG

(11) **EP 1 156 016 A2**
(43) Veröffentlichungstag der Anmeldung: **21.11.2001**
(21) Anmeldenummer: 01111037.6
(22) Anmeldetag: 08.05.2001
(51) Int. Cl.: C02F 3/20, C02F 3/10

(54) **Verfahren und Vorrichtung zur Reinigung häuslicher Abwässer**

(30) Priorität: 08.05.2000 DE 10022148
(71) Anmelder: Riebensahm, Katrin, 27404 Gyhum (DE)
(72) Erfinder: Riebensahm, Katrin, 27404 Gyhum (DE)
(74) Vertreter: Eisenführ, Speiser & Partner

(57) **Zusammenfassung**

Verfahren und Vorrichtung zur Reinigung häuslicher Abwässer, bei denen das zu reinigende Abwasser zunächst in einen ersten Behälter (2) eingeleitet wird. In dem ersten Behälter (2) ist ein zweiter Behälter (5) angeordnet. Gas wird in den zweiten Behälter (5) eingeleitet. Das zu reinigende Abwasser durchströmt den zweiten Behälter (5) zumindest teilweise und wird dabei gründlich biologisch gereinigt.

## Beschreibung

Die Erfindung betrifft ein Verfahren zur Reinigung häuslicher Abwässer, bei dem das zu reinigende Abwasser in einen ersten Behälter eingeleitet wird. Die Erfindung betrifft weiterhin eine Vorrichtung zur Reinigung häuslicher Abwässer mit einem ersten Behälter, in den das zu reinigende Abwasser einleitbar ist. Die Erfindung betrifft ferner eine Vorrichtung zur Reinigung häuslicher Abwässer, welche in einen Behälter oder Becken einer Kleinkläranlage anordbar sind.

Vorrichtungen dieser Art dienen dazu häusliche Abwässer zu reinigen, die aufgrund eines fehlenden Anschlusses des betreffenden Haushalts an ein Abwassersystem lokal gereinigt werden müssen. Die gereinigten Abwässer können dann anschließend einer Verrieselung oder einem Vorfluter zugeführt werden.

Aus der DIN 4261, Teil 2 "Kleinkläranlagen; Anlagen mit Abwasserbelüftung; Anwendung, Bemessung, Ausführung und Prüfung", Juni 1984 sind ein Verfahren und eine Vorrichtung zur Reinigung häuslicher Abwässer der eingangs beschriebenen Art bekannt. Das zu reinigende Abwasser wird in ein mit einer Belüftungseinrichtung versehenes Belebungsbecken eingeleitet. Die Belüftungseinrichtung dient zum Einbringen von Sauerstoff in das Belebungsbecken und zum Umwälzen des enstehenden Abwasser-Schlamm-Gemisches. Dem Belebungsbecken, in welchem das Abwasser aerob biologisch behandelt wird, ist meist eine mechanische Reinigungsstufe vorgeschaltet, in der absetzbare Stoffe und Schwimmstoffe abgetrennt werden.

Der Erfindung liegt die Aufgabe zugrunde, ein Verfahren und eine Vorrichtung zur Reinigung häuslicher Abwässer der eingangs beschriebenen Art bereitzustellen, mit denen eine gründliche biologische Reinigung des Abwassers möglich ist, und die auch bei bereits bestehenden Kleinkläranlagen anwendbar sind.

Erfindungsgemäß wird dies bei einem Verfahren zur Reinigung häuslicher Abwässer der eingangs beschriebenen Art dadurch erreicht, dass Gas in einen in dem ersten Behälter angeordneten zweiten Behälter eingeleitet wird, und dass das zu reinigende Abwasser den zweiten Behälter zumindest teilweise durchströmt.

Bei dem neuen Verfahren wird der in dem ersten Behälter angeordnete zweite Behälter dazu genutzt, Gas in das zu reinigende Abwasser einzubringen und das Abwasser zumindest teilweise im Innenraum des zweiten Behälters zu reinigen. Der zweite Behälter kann problemlos in eine bereits bestehende Kleinkläranlage integriert werden, indem er in ein Becken bzw. einer Kammer dieser Kleinkläranlage nachträglich eingestellt wird. Der zweite Behälter stellt somit sozusagen eine weitere Reinigungsstufe innerhalb der bereits bestehenden Kammer der Anlage bereit uns sorgt für eine effektive Reinigung.

Vorzugsweise wird das Gas derart in einen unteren Bereich des zweiten Behälters eingeleitet, dass es in dem zweiten Behälter aufsteigt und dass das in dem ersten Behälter befindliche zu reinigende Abwasser aufgrund des entstehenden Unterdrucks oder einer Dichtereduktion in den zweiten Behälter eingesaugt wird. Beim Betreiben des neuen Verfahrens über einen gewissen Zeitraum entsteht der Effekt, dass das Abwasser durch den ersten und den zweiten Behälter zirkuliert. Das in den unteren Bereich des zweiten Behälters eingebrachte Gas steigt aufgrund seiner im Vergleich zu dem Abwasser geringeren Dichte in dem zweiten Behälter nach oben und weiter bis in den ersten Behälter auf, so dass ein Unterdruck entsteht, der das in dem ersten Behälter befindliche Abwasser zumindest teilweise in den Innenraum des zweiten Behälters einsaugt. Aufgrund der Sogwirkung des Gases steigt auch das zu reinigende Abwasser in dem zweiten Behälter auf. Dabei findet eine intensive Durchmischung der Gasblasen und des zu reinigenden Abwassers statt, so dass der für die biologische Abbaureaktion der Schadstoffe des Abwassers notwendige Sauerstoff zuverlässig bereitgestellt wird. Schließlich strömt das zumindest teilweise gereinigte Abwasser aus dem zweiten Behälter in den Bereich des ersten Behälters zurück, wobei zumindest Teile des gereinigten Abwassers aufgrund der Sogwirkung der Gasblasen in den zweiten Behälter erneut eingesaugt und darin gereinigt werden.

Für die biologische Reinigung des Abwassers kann in den zweiten Behälter ein Trägermaterial eingefüllt werden, auf dessen Oberfläche sich Biomasse festsetzt. Bei dem Trägermaterial kann es sich beispielsweise um Holz, Papier, Kunststoffreste, Kork, PVC, Polyethylen, Aktivkohle, Ton oder dergleichen handeln. Die für eine aerobe, biologische Behandlung des Abwassers notwendige Biomasse bzw. die Bakterien setzen sich auf der Oberfläche des Trägermaterials fest und stehen für die biologische Behandlung des Abwassers zur Verfügung. Vorzugsweise sind die Partikel des Trägermaterials bewegbar in dem Behälter angeordnet, so dass sie sich reinigen durch Berührung mit dem Behälter oder anderen Partikeln.

Das zu reinigende Abwasser kann vor der Einleitung in den ersten Behälter in einer ersten Kammer mechanisch vorgereinigt werden, wobei der erste und der zweite Behälter Teil einer zweiten Kammer sind. In dieser Weise kann das zu reinigende Abwasser in der ersten Kammer zunächst von Sinkstoffen, Schwebestoffen und gröberen Schmutzpartikeln gereinigt werden, so dass in der zweiten Kammer das vorgereinigte Abwasser im wesentlichen biologisch gereinigt wird.

Vorzugsweise wird das in der zweiten Kammer biologisch gereinigte Abwasser anschließend in eine dritte Kammer eingeleitet. In der dritten Kammer kann das Abwasser dann beispielsweise erneut von Sinkstoffen befreit werden. Anschlieβend kann das gereinigte Abwasser einer Verrieselung zugeführt werden.

Erfindungsgemäß wird die Aufgabe bei einer Vorrichtung der eingangs beschriebenen Art dadurch gelöst, dass in dem ersten Behälter ein zweiter Behälter angeordnet ist, in den Gas einleitbar ist und der von dem zu reinigenden Abwasser zumindest teilweise durchströmbar ausgebildet ist.

Vorzugsweise ist für die Einleitung des Gases eine Druckgasquelle und eine mit einem unteren Bereich des zweiten Behälters verbundene Leitung vorgesehen. Der zweite Behälter kann in seinem unteren Bereich einen Begasungspilz aufweisen, durch dessen Öffnungen das Gas in den zweiten Behälter einleitbar ist. Es ist jedoch ebenso möglich, das Gas in anderer Weise in den zweiten Behälter einzuleiten, beispielsweise durch Gasdüsen in Verbindung mit einem Wirbelrad. Wichtig ist, dass eine Strömung innerhalb des zweiten Behälters erzeugt wird.

Der zweite Behälter kann in seinem unteren Bereich Ausnehmungen aufweisen, die derart ausgebildet und angeordnet sind, dass Abwasser von dem ersten Behälter in den zweiten Behälter einströmen kann. Wenn der zweite Behälter in seinem oberen Bereich zusätzlich Öffnungen, beispielsweise Durchbrechungen in einem Deckel, aufweist, können das Gas und das Abwasser von dem zweiten Behälter in den ersten Behälter einströmen. Hierdurch ergibt sich in vorteilhafter Weise die Möglichkeit eine zyklische Strömung zu erzeugen, wobei das Abwasser zunächst in den unteren Bereich des zweiten Behälters einströmt, aus dem oberen Bereich des zweiten Behälters in den ersten Behälter zurückströmt und aufgrund des Soges der Gasblasen in dem zweiten Behälter zurückgesaugt und dort erneut biologisch gereinigt wird.

Der erste Behälter und/oder der zweite Behälter können zylindrisch ausgebildet sein. Hierdurch ergibt sich eine besonders gleichmäßige Durchströmung der Behälter ohne Auftreten von Toträumen oder dergleichen, in denen keine wesentliche Reinigung des Abwassers stattfindet.

Der zweite Behälter kann in seinem unteren Bereich mindestens einen Fuß aufweisen, mit dem er in den ersten Behälter einstellbar ist. Vorzugsweise weist der zweite Behälter vier Füße auf, die es gleichzeitig ermöglichen den zweiten Behälter in den ersten Behälter einzustellen und eine Leitung für die Zufuhr des Gases von unten an den zweiten Behälter heranzuführen.

Der erste und der zweite Behälter können Teil einer Kammer sein, wobei mindestens eine weitere Kammer zur mechanischen Vorreinigung des Abwassers vorgesehen ist. Vorzugsweise sind insgesamt drei Kammern vorgesehen, wobei in der ersten Kammer eine mechanische Vorreinigung des Abwassers vonstatten geht, in der zweiten Kammer die biologische Reinigung des Abwassers mit der neuen Vorrichtung durchgeführt wird und die dritte Kammer schließlich einer Nachreinigung des Abwassers dient.

Erfindungsgemäß wird die Aufgabe auch bei einer Vorrichtung zur Reinigung häuslicher Abwässer, welche in einem Behälter oder Becken einer Kleinkläranlage anordbar sind, dadurch gelöst, dass ein Behälter und eine mit einer Druckgasquelle verbindbare Begasungseinrichtung zum Einleiten von Gas in den Behälter vorgesehen sind. Der zweite Behälter ist somit problemlos und ohne größeren Bauaufwand auch in bereits bestehende Kleinkläranlagen einbaubar. Diese können zur Erfüllung strengerer Umweltnormen mit der neuen Vorrichtung ausgestattet werden.

Die Erfindung wird anhand eines bevorzugten Ausführungsbeispiels näher erläutert und beschrieben.

Figur 1 zeigt eine schematisierte Querschnittsansicht einer Vorrichtung zur Reinigung häuslicher Abwässer.

Figur 2 zeigt eine schematisierte Querschnittsansicht der Vorrichtung gemäß Figur 1 in einer Kleinkläranlage mit drei Kammern.

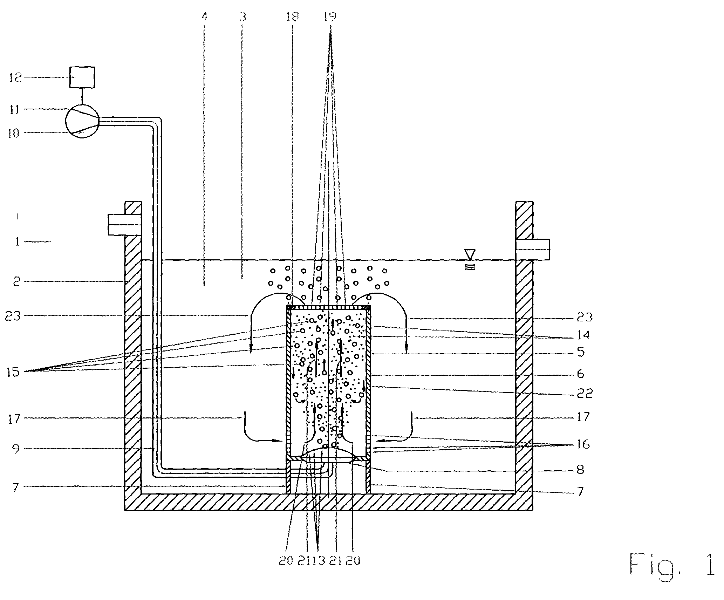

Figur 1 zeigt die wesentlichen Elemente einer Vorrichtung 1 zur Reinigung häuslicher Abwässer in einer schematisierten Ansicht. Die Vorrichtung 1 weist einen ersten äußeren Behälter 2 auf, der außen und innen zylindrisch ausgebildet ist. Eine Andere Geometrien des Behälters 2 sind aber ebenso denkbar und möglich. Der Behälter 2 ist bis auf eine Öffnung 3 im Bereich seiner oberen Stirnseite geschlossen und dichtend ausgebildet, so dass das zu reinigende Abwasser gemäß Pfeil 4 in den Behälter 2 einleitbar ist und sich ein gewisses Flüssigkeitsvolumen in dem Behälter 2 einstellt. Bei dem zu reinigenden Abwasser handelt es sich vorzugsweise um solches aus dem häuslichen Bedarf, das aufgrund des Fehlens eines Anschlusses des Hauses an ein öffentliches Abwassersystem in einer häuslichen Kleinkläranlage gereinigt wird.

In dem ersten Behälter 2 ist ein zweiter innerer Behälter 5 angeordnet. Der Behälter 5 weist einen zylindrischen Grundkörper 6 auf, der in seinem unteren Bereich mit Füßen 7 verbunden ist, mittels derer der Behälter 5 in den äußeren Behälter 2 und auf dessen Boden eingestellt ist. In seinem unteren Bereich weist der Behälter 5 einen Begasungspilz 8 auf, der zur Einleitung von Gas in den Behälter 5 dient.

Der Begasungspilz 8 ist mit einer Leitung 9 verbunden, über die mittels einer Pumpe 10 bzw. einer Druckgasquelle 11 ein Gas, vorzugsweise Luft, in den Begasungspilz 8 eingebracht wird. Desweiteren ist eine Zeitschaltvorrichtung 12 vorgesehen, mittels derer die Einleitung des Gases zeitlich steuerbar ist. Es versteht sich, dass die Pumpe 10, die Druckgasquelle 11, und die Zeitschaltvorrichtung 12 entsprechende Anschlüsse zur Spannungsversorgung bzw. zur Versorgung mit Gas aufweisen.

Der Begasungspilz 8 weist in seinem oberen, kuppelförmigen Bereich eine Vielzahl von Gasaustrittsöffnungen 13 auf, über die das Gas in das zu reinigende Abwässer innerhalb des Behälters 5 gelangt. Die in dem Behälter 5 nach oben aufsteigenden Gasblasen 14 sind in Figur 1 symbolisch dargestellt. Es versteht sich, dass das Gas eine geringere Dichte als das zu reinigenden Abwasser besitzt, so dass die Gasblasen 14 in dem Behälter 5 aufsteigen. In dem Behälter 5 ist weiterhin ein Trägermaterial 15 enthalten, auf dessen Oberfläche sich Biomasse festsetzt, die zur biologischen Reinigung des Abwassers dient. Auch die Partikel des Trägermaterials 15 sind in Figur 1 lediglich symbolisch und ohne Maßstab dargestellt. Der Behälter 5 weist im unteren Bereich seiner Mantelfläche eine Vielzahl von Ausnehmungen 16 auf, durch die das zu reinigende Abwasser gemäß Pfeil 17 aus dem äußeren Behälter 2 in den inneren Behälter 5 einfließt. In seinem oberen Bereich weist der Behälter 2 schließlich einen Deckel 18 mit Durchbrechungen 19 auf.

Für den Betrieb der Vorrichtung 1 wird zunächst Trägermaterial 15 nach Art von Füllkörpern oder dgl. mit der für die biologische Abwasserreinigung notwendigenden Biomasse in den Innenraum des Behälters 5 eingebracht. Nach Einbringen des Trägermaterials wird der Behälter 5 mittels des Deckels 18 verschlossen. Wenn der Behälter 5 bereits in dem Behälter 2 angeordnet ist, kann gemäß Pfeil 4 zu reinigende Abwasser in den Behälter 2 eingefüllt werden. Es ist jedoch ebenfalls möglich, zunächst einen gewissen Pegel an zu reinigendem Abwasser in den Behälter 2 einzustellen, um erst dann den Behälter 5 in den Behälter 2 zu plazieren.

Mittels der Zeitschaltuhr 12 wird die Vorrichtung 1 in den gewünschten Intervallen betrieben. Die Pumpe 10 bzw. ein Kompressor saugt Umgebungsluft ein und pumpt diese durch die Leitung 9 in den Innenraum des Begasungspilzes 8 ein. Die Luft strömt durch die Gasaustrittsöffnungen 13 des Begasungspilzes 8 in den Innenraum des Behälters 5 und in das dort befindliche zu reinigende Abwasser ein. Die Gasblasen 14 strömen in dem Behälter 2 nach oben und stellen an der Katalysatoroberfläche des Trägermaterials 15 den für den biologischen Abbau von Schadstoffen notwendigen Sauerstoff zur Verfügung. Die nach oben steigenden Gasblasen 14 stellen sicher, dass ein gewisser Unterdruck in dem Behälter 5 entsteht, der wiederum dafür sorgt, dass zu reinigendes Abwasser gemäß Pfeil 17 durch die Ausnehmungen 16 des Behälters 5 in diesen einströmt. Das Abwasser strömt innerhalb des Behälters 5 weiter in Richtung der Pfeile 20, 21, wobei sich das Abwasser gründlich mit den Gasblasen 14 und dem Trägermaterial 15 bzw. der daran aufgenommenen Biomasse durchmischt, so dass eine intensive biologische Reaktion stattfindet.

Auch das Trägermaterial 15 steigt in dem Behälter 5 auf; es wird jedoch durch den Deckel 18 an einem Ausströmen aus dem Behälter 5 gehindert. Es entsteht innerhalb des Behälters 5 eine gewisse zyklische Strömung, die dafür sorgt, dass das Trägermaterial 15 gemäß Pfeilen 22 zurück nach unten und in den Behälter 5 strömt, wobei eine gründliche Reinigung des Trägermaterials 15 stattfindet. Das zu reinigende Abwasser und die Gasblasen 14 treten schließlich durch die Durchbrechungen 19 des Deckels 18 aus dem Behälter 5 aus. Die Gasblasen 14 steigen weiter in dem Behälter 2 auf, bis sie letztlich in die Umgebungsluft entweichen. Gegebenenfalls kann das entweichende Gas auch abgesaugt werden. Aufgrund des in dem Behälter 5 entstandenen Soges wird das durch die Durchbrechungen 19 des Deckels 18 aus dem Behälter 5 austretende Abwasser gemäß Pfeilen 23 wieder in den unteren Bereich des Behälters 2 und des Behälters 5 eingesaugt, bis es schließlich durch die Ausnehmungen 16 des Behälters 5 wieder in diesen eintritt, um erneut gereinigt zu werden. Das Abwasser zirkuliert also durch die Behälter 2, 5.

Wenn schließlich die gewünschte Reinigungswirkung erzielt wurde, kann das gereinigte Abwasser aus dem Behälter 2 ausgepumpt bzw. ausgelassen werden, um gegebenenfalls einer Verrieselung zugeführt zu werden. Mit der zirkulierenden Reinigung der Vorrichtung 1 ist es problemlos möglich, den vom Gesetzgeber geforderten Einleitgrenzwert von 150 mg/l BSB einzuhalten und gar wesentlich zu unterschreiten.

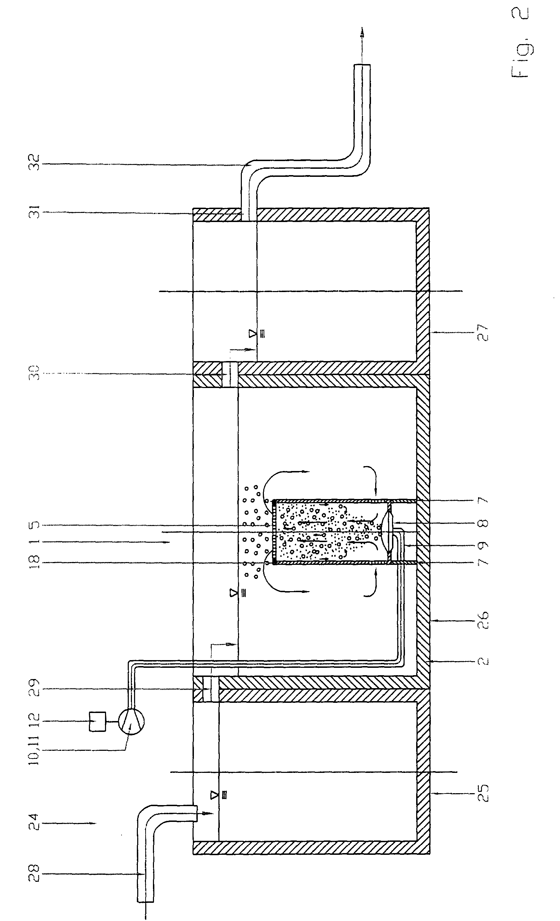

Figur 2 zeigt die Verwendung der Vorrichtung 1 in einer Kleinkläranlage 24 mit drei Kammern 25, 26, 27. Die erste Kammer 25 dient dabei der mechanischen Vorreinigung des zu reinigenden Abwassers. Das zu reinigende Abwasser gelangt durch eine Leitung 28 in die erste Kammer 25, und es strömt durch einen Ablauf 29 in die zweite Kammer 26 ein, in der der Behälter 5 angeordnet ist. In der Kammer 26 läuft das mit Bezug auf Figur 1 beschriebende Verfahren zur Reinigung des Abwassers ab, so dass auf den entsprechenden Teil der Beschreibung verwiesen wird. Das biologisch gereinigte Abwasser verlässt die Kammer 26 durch einen Ablauf 30 und strömt in die dritte Kammer 27 ein. In der Kammer 27 ist eine weitere Reinigungsstufe, beispielsweise eine rein mechanische Reinigungsstufe, vorgesehen. Schließlich verlässt das gereinigte Abwasser die Kleinkläranlage 24 durch einen Ablauf 31 und ein Sickerrohr 32, so dass das gereinigte Abwasser einer Verrieselung zugeführt werden kann.

Die neue Vorrichtung 1 könnte ebenfalls in einer Kleinkläranlage mit zwei Kammern eingesetzt werden. Es ist dabei sicherzustellen, dass ein feststofffreier Ablauf des gereinigten Abwassers garantiert wird.

### Bezugszeichenliste

- 1: Vorrichtung
- 2: Behälter
- 3: Öffnung
- 4: Pfeil
- 5: Behälter
- 6: Grundkörper
- 7: Fuß
- 8: Begasungspilz
- 9: Leitung
- 10: Pumpe
- 11: Druckgasquelle
- 12: Zeitschaltvorrichtung
- 13: Gasaustrittsöffnung
- 14: Gasblase
- 15: Trägermaterial
- 16: Ausnehmung
- 17: Pfeil
- 18: Deckel
- 19: Durchbrechung
- 20: Pfeil
- 21: Pfeil
- 22: Pfeil
- 23: Pfeil
- 24: Kleinkläranlage
- 25: Kammer
- 26: Kammer
- 27: Kammer
- 28: Leitung
- 29: Ablauf
- 30: Ablauf
- 31: Ablauf
- 32: Sickerrohr

## Patentansprüche

1. Verfahren zur Reinigung häuslicher Abwässer, bei dem das zu reinigende Abwasser in einen ersten Behälter (2) eingeleitet wird,
**dadurch gekennzeichnet, dass** Gas in einen in dem ersten Behälter (2) angeordneten zweiten Behälter (5) eingeleitet wird, und dass das zu reinigende Abwasser den zweiten Behälter (5) zumindest teilweise durchströmt.

2. Verfahren nach Anspruch 1,
**dadurch gekennzeichnet, dass** das Gas derart in einen unteren Bereich des zweiten Behälters (5) eingeleitet wird und in dem zweiten Behälter (5) aufsteigt, dass das in dem ersten Behälter (2) befindliche zu reinigende Abwasser aufgrund des entstehenden Unterdrucks in den zweiten Behälter (5) eingesaugt wird.

3. Verfahren nach Anspruch 1 oder 2,
**dadurch gekennzeichnet, dass** das Abwasser durch den ersten und den zweiten Behälter (2, 5) zirkuliert.

4. Verfahren nach einem der Ansprüche 1 bis 3,
**dadurch gekennzeichnet, dass** ein Trägermaterial (15), auf dessen Oberfläche sich Biomasse festsetzen kann, in dem zweiten Behälter (5) vorzugsweise bewegbar angeordnet ist.

5. Verfahren nach einem der Ansprüche 1 bis 4,
**dadurch gekennzeichnet, dass** das zu reinigende Abwasser vor der Einleitung in den ersten Behälter (2) in einer ersten Kammer (25) mechanisch vorgereinigt wird.

6. Verfahren nach einem der Ansprüche 1 bis 4,
**dadurch gekennzeichnet, dass** das zu reinigende Abwasser von der zweiten Kammer (26) in eine dritte Kammer (27) eingeleitet wird.

7. Vorrichtung zur Reinigung häuslicher Abwässer, insbesondere zur Durchführung des Verfahrens nach mindestens einem der Ansprüche 1 bis 6, mit einem ersten Behälter (2), in den das zu reinigende Abwasser einleitbar ist, **gekennzeichnet durch** einen in dem ersten Behälter (2) angeordneten zweiten Behälter (5), in den Gas einleitbar ist und der von dem zu reinigenden Abwasser zumindest teilweise durchströmbar ausgebildet ist.

8. Vorrichtung nach Anspruch 7,
**dadurch gekennzeichnet, dass** eine Druckgasquelle (11) und eine mit einem unteren Bereich des zweiten Behälters (5) verbundene Leitung (9) zur Einleitung des Gases in den zweiten Behälter (5) vorgesehen sind.

9. Vorrichtung nach Anspruch 7 oder 8,
**dadurch gekennzeichnet, dass** der zweite Behälter (5) in seinem unteren Bereich einen Begasungspilz (8) aufweist, durch dessen Gasaustrittsöffnungen (13) das Gas in den zweiten Behälter (5) einleitbar ist.

10. Vorrichtung nach einem der Ansprüche 7 bis 9,
**dadurch gekennzeichnet, dass** der zweite Behälter (5) in seinem unteren Bereich Ausnehmungen (16) aufweist, die derart ausgebildet und angeordnet sind, dass Abwasser von dem ersten Behälter (2) in den zweiten Behälter (5) einströmen kann.

11. Vorrichtung nach einem der Ansprüche 7 bis 10,
**dadurch gekennzeichnet, dass** der zweite Behälter (5) in seinem oberen Bereich einen Deckel (18) mit Durchbrechungen (19) aufweist, die derart ausgebildet und angeordnet sind, dass das Gas und das Abwasser von dem zweiten Behälter (5) in den ersten Behälter (2) einströmen können.

12. Vorrichtung nach einem der Ansprüche 7 bis 11,
**dadurch gekennzeichnet, dass** der erste Behälter (2) und/oder der zweite Behälter (5) zylindrisch ausgebildet ist.

13. Vorrichtung nach einem der Ansprüche 7 bis 12,
**dadurch gekennzeichnet, dass** der zweite Behälter (5) in seinem unteren Bereich mindestens einen Fuß (7) aufweist, mit dem er in den ersten Behälter (2) einstellbar ist.

14. Vorrichtung nach einem der Ansprüche 7 bis 13,
**dadurch gekennzeichnet, dass** der erste und der zweite Behälter (2, 5) Teil einer Kammer (26) sind, und dass mindestens eine weitere Kammer (25) zur mechanischen Vorreinigung des Abwassers vorgesehen ist.

15. Vorrichtung zur Reinigung häuslicher Abwässer, insbesondere zur Durchführung des Verfahrens nach mindestens einem der Ansprüche 1 bis 6, welche in einem Behälter (2) oder Becken einer Kleinkläranlage (24) anordbar ist, mit einem Behälter (5), und einer mit einer Druckgasquelle (11) verbindbaren Begasungseinrichtung (8) zum Einleiten von Gas in den Behälter (5).

16. Vorrichtung nach Anspruch 15,
**dadurch gekennzeichnet, dass** sie nach mindestens einem der Ansprüche 7 bis 14 ausgebildet ist.
